# EUROPEAN PATENT APPLICATION

(11) **EP 4 692 247 A1**
(43) Date of publication of application: **11.02.2026**
(21) Application number: 24779567.7
(22) Date of filing: 15.03.2024
(51) Int. Cl.: C08L 101/10, C08K 5/5415, C08L 71/02

(54) **CURABLE COMPOSITION**

(30) Priority: 30.03.2023 JP 2023056335
(71) Applicant: KANEKA CORPORATION, Osaka 530-8288 (JP)
(72) Inventor: ZHANG Dong, Takasago-shi, Hyogo 676-8688 (JP)
(74) Representative: Vossius & Partner Patentanwälte Rechtsanwälte mbB
(86) International application number: PCT/JP2024/010176
(87) International publication number: WO 2024/203438

(57) **Abstract**

The present invention provides a curable composition that contains a silane compound, a non-tin-based curing catalyst, and an organic polymer having a bifunctional dialkoxysilyl group as a reactive silicon group, and that exhibits quick curability. Provided is a curable composition that contains a silane compound, a non-tin-based curing catalyst, and an organic polymer having a bifunctional dialkoxysilyl group as a reactive silicon group, wherein an amidine compound and a titanium compound are used in combination as the curing catalyst, and a silane condensate having a specific structure is used as the silane compound.

## Description

### TECHNICAL FIELD

The present invention relates to a curable composition including an organic polymer having a reactive silicon group, a curing catalyst including a specific compound, and a silane condensate.

### BACKGROUND ART

The organic polymer having at least one reactive silicon group in the molecule can be crosslinked by a hydrolysis reaction of silyl groups, due to moisture even at room temperature, etc. accompanied by siloxane bond formation. An organic polymer having a reactive silicon group is known to have a property of giving a rubber-like cured product by such a crosslinking reaction.

When an organic polymer having a reactive silicon group is used as a curable composition such as a sealing material, an adhesive, a paint, and a waterproofing material, the curable composition is required to have various properties such as curability, adhesion, workability, mechanical properties of a cured product, and waterproofing properties.

The curable composition containing an organic polymer having a reactive silicon group is usually cured using a silanol condensation catalyst such as an organotin compound having a carbon-tin bond typified by dibutyltin bis(acetylacetonato). The silanol condensation catalyst is also referred to as a curing catalyst. In recent years, since toxicity of organotin compounds has been pointed out, use of non-tin catalysts has been proposed (Patent Document 1).

### Citation List

### Patent Document

Patent Document 1: Japanese Unexamined Patent Application, Publication No. 2014-114434

### DISCLOSURE OF THE INVENTION

### Problems to be Solved by the Invention

In the curable composition containing an organic polymer having a reactive silicon group, a bifunctional dialkoxylyl group such as a dimethoxymethylsilyl group may be employed as the reactive silicon group in order to obtain a cured product having high elongation and flexibility. Further, various silane compounds typified by a silane coupling agent may be blended in the curable composition containing an organic polymer having a reactive silicon group in order to improve stability of the curable composition and/or impart adhesion to an adherend. However, the organic polymer having a bifunctional dialkoxylyl group such as a dimethoxymethylsilyl group generally has low hydrolyzability. In particular, when an organic polymer having a bifunctional dialkoxyl group is combined with a non-tin catalyst, there is a problem that a sufficient curing rate cannot be obtained. Patent Document 1 proposes use of DBU and titanium diisopropoxide bis(ethylacetoacetate) in combination as a non-tin curing catalyst in a curable composition including a trimethoxysilane coupling agent and an organic polymer having a dimethoxymethylsilyl group. However, the curing rate of the curable composition described in Patent Document 1 was insufficient. Therefore, improvement of the curing rate of the curable composition containing an organic polymer having a bifunctional dialkoxysilyl group, a silane compound, and a tin-free curing catalyst is required.

The present invention has been made in view of the above problems, and an object of the present invention is to provide a curable composition that includes an organic polymer having a bifunctional dialkoxysilyl group as a reactive silicon group, a silane compound, and a tin-free curing catalyst, and exhibits fast curability.

### Means for Solving the Problems

In order to solve the above problem, the present inventors have found that in a curable composition containing an organic polymer having a bifunctional dialkoxysilyl group as a reactive silicon group, a silane compound, and a tin-free curing catalyst, the above problems can be solved by using a combination of an amidine compound and a titanium compound as the curing catalyst and using a silane condensate having a specific structure as the silane compound, and have completed the present invention.

That is, the present invention provides,
a curable composition including an organic polymer (A), a curing catalyst (B), and a silane condensate (C),
the organic polymer (A) having a reactive silicon group represented by the following formula (1):

   -SiR¹X₂ (1)

   in which R¹ represents a hydrocarbon group having 1 to 20 carbon atoms, X represents a hydroxy group or a hydrolyzable group, and two X groups may be the same or different,
   the curing catalyst (B) including an amidine compound (b1) and a titanium compound (b2),
   the amidine compound (b1) being a compound represented by the following formula (2):

      R²N=CR³-NR⁴₂ (2)

      in which R², R³, and R⁴ each represent a hydrogen atom or a hydrocarbon group having 1 to 20 carbon atoms which may have a substituent, two R⁴ groups may be the same or different, and
      any two of R², R³, and two R⁴ groups may be bonded to each other to form a ring,
      the titanium compound (b2) being a compound represented by the following formula (3):

         Ti(OR⁵)_{d}Y_{4-d} (3)

         in which R⁵ is a hydrocarbon group having 1 to 20 carbon atoms which may have a substituent, Y is a chelate coordination compound, and d is an integer of 0 to 4,
         the silane condensate (C) being a compound the represented by the following formula (4): 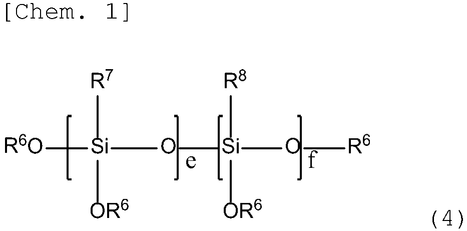 in which R⁶ is a methyl group or an ethyl group, R⁶ may be the same or different, R⁷ and R⁸ are hydrocarbon groups having 1 to 20 carbon atoms which may have a substituent, R⁷ and R⁸ may be the same or different, and e and f are integers of 1 to 50.

### Effects of the Invention

According to the present invention, it is possible to provide a curable composition that includes an organic polymer having a bifunctional dialkoxysilyl group as a reactive silicon group, a silane compound, and a tin-free curing catalyst, and exhibits fast curability.

### PREFERRED MODE FOR CARRYING OUT THE INVENTION

Hereinafter, the present invention will be described in detail.

### «Curable Composition»

The curable composition includes an organic polymer (A), a curing catalyst (B), and a silane condensate (C). The organic polymer (A) has a reactive silicon group represented by the following formula (1):

-SiR¹X₂ (1)

In the formula (1), R¹ represents a hydrocarbon group having 1 to 20 carbon atoms. X represents a hydroxy group or a hydrolyzable group. Two X groups may be the same or different.

The curing catalyst (B) includes an amidine compound (b1) and a titanium compound (b2). The amidine compound (b1) is a compound represented by the following formula (2):

R²N=CR³-NR⁴₂ (2)

In the formula (2), R², R³, and R⁴ each represent a hydrogen atom or a hydrocarbon group having 1 to 20 carbon atoms which may have a substituent. Two R⁴ groups may be the same or different. Any two of R², R³, and two R⁴ groups may be bonded to each other to form a ring.

The titanium compound (b2) is a compound represented bv the following formula (3) or a condensation product thereof:

Ti(OR⁵)_{d}Y_{4-d} (3)

In the formula (3), R⁵ represents a hydrocarbon group having 1 to 20 carbon atoms which may have a substituent. Y is a chelate coordination compound.
d is an integer of 0 to 4.

The silane condensate (C) is a compound represented by the following formula (4):

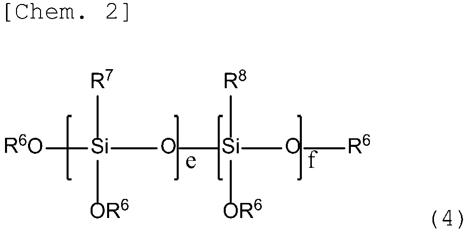

In the formula (4), R⁶ is a methyl or ethyl group, and R⁶ may be the same or different. R⁷ and R⁸ each represent a hydrocarbon group having 1 to 20 carbon atoms which may have a substituent, and R⁷ and R⁸ may be the same or different. e and f each represent an integer of 1 to 50.

In addition, the curable composition contains various other additives as necessary.

Hereinafter, essential or optional components that may be included in the curable composition will be described.

### <Organic Polymer (A)>

The organic polymer (A) has a reactive silicon group represented by the formula (1). The organic polymer (A) has a polymer skeleton and polymer chain terminals which are bonded to the polymer skeleton. In the description and the claims of the present application, the polymer skeleton is also referred to as a "main chain structure". The polymer skeleton is a structure in which a plurality of constituent units derived from a monomer are continuously bonded. The monomer may be one type or plural types.

A polymer chain terminal is a site located at a terminal of the organic polymer (A). The number of polymer chain terminals of the organic polymer (A) is 2 when the main chain structure is linear, and is 3 or more when the polymer skeleton is branched. When the organic polymer (A) is a mixture of a polymer having a linear main chain structure and a polymer having a branched main chain structure, the number of polymer chain terminals is a numerical value between 2 and 3 as an average value.

The reactive silicon group may be present in the polymer skeleton and in the polymer chain terminals. In addition, two or more reactive silicon groups may be present in the polymer chain terminals. When the curable composition is used for an adhesive, a sealing material, an elastic coating agent, a tackifier, or the like, the reactive silicon group is preferably present in the polymer chain terminals in the organic polymer (A).

### (Reactive Silicon Groups)

The reactive silicon group is a group capable of generating a silanol group by hydrolysis. When the reactive silicon group generates a silanol group, the organic polymer (A) is crosslinked by a condensation reaction between the silanol groups. As described above, the reactive silicon group is a group represented by the following formula (1):

-SiR¹X₂ (1)

In the formula (1), R¹ represents a hydrocarbon group having 1 to 20 carbon atoms. X is a hydroxy group or a hydrolyzable group, and two X groups may be the same or different.

Examples of R¹ in the formula (1) include alkyl groups such as a methyl group, an ethyl group, an n-propyl group, an isopropyl group, an n-butyl group, a tert-butyl group, an n-hexyl group, a 2-ethylhexyl group, an n-dodecyl group, etc.; unsaturated hydrocarbon groups such as a vinyl group, an isopropenyl group, an allyl group, etc.; cycloalkyl groups, such as a cyclohexyl group, etc.; aryl groups such as a phenyl group, a tolyl group, 1-naphthyl group, etc.; aralkyl groups such as a benzyl group, etc. or the like. Among these groups, an alkyl group and an aryl group are preferable, a methyl group, an ethyl group and a phenyl group are more preferable, a methyl group and an ethyl group are still more preferable, and a methyl group is particularly preferable.

X in the formula (1) is a hydroxy group or a hydrolyzable group. The hydrolyzable group is not particularly limited, and may be a known hydrolyzable group. Examples of the hydrolyzable group include a hydrogen atom, a halogen atom, an alkoxy group, an acyloxy group, a ketoxymate group, an amino group, an amide group, an acid amide group, an aminooxy group, a mercapto group, an alkenyloxy group, etc. Among these, an alkoxy group, an acyloxy group, a ketoxymate group, and an alkenyloxy group are preferable, and an alkoxy group such as a methoxy group, an ethoxy group, etc. is more preferable because of mild hydrolyzability and easy handling. Two X groups in the formula (1) may be the same group or different groups.

The reactive silicon group represented by the formula (1) is not particularly limited. Examples of the reactive silicon group represented by the formula (1) include a dimethoxymethylsilyl group, a diethoxymethylsilyl group, a dimethoxyphenylsilyl group, etc. Among these, a dimethoxymethylsilyl group is preferable because a raw material thereof is easily available.

### (Regarding Main Chain Structure of Organic Polymer (A))

The main chain structure of the organic polymer (A) is not particularly limited, and various known main chain structures may be used. Examples of the main chain structure include: polyoxyalkylene-based polymers such as a polyoxyethylene polymer, a polyoxypropylene polymer, a polyoxybutylene polymer, a polyoxytetramethylene polymer, a polyoxyethylene-polyoxypropylene copolymer, a polyoxypropylene-polyoxybutylene copolymer, etc.; hydrocarbon-based polymers such as an ethylene-propylene-based copolymer, polyisobutylene, an isobutylene-isoprene-based copolymer, polybutadiene, and hydrogenated polyolefin-based polymers obtained by hydrogenation of these polyolefin-based polymers, etc.; polyester-based polymers such as a polycondensate of a dibasic acid such as adipic acid, etc. with a glycol, ring-opening polymers of lactones, etc.; (meth)acrylate-based polymers obtained by radical polymerization of (meth)acrylate-based monomers such as methyl (meth)acrylate, ethyl (meth)acrylate, butyl (meth)acrylate, 2-ethylhexyl (meth)acrylate, stearyl (meth)acrylate, etc.; vinyl-based copolymers obtained by radical polymerization of two or more monomers selected from (meth)acrylate monomers, vinyl acetate, acrylonitrile, styrene, etc.; polysulfide-based polymers; diallyl phthalate-based polymers, or the like. Note that the (meth)acrylate means both an acrylate and a methacrylate.

The polyoxyalkylene-based polymers and the (meth)acrylate-based polymers are particularly preferable as the main chain structure because they are excellent in deep-part curability as a one-component composition due to high moisture permeability and also are excellent in adhesion. As the main chain structure, the polyoxyalkylene-based polymers are more preferable, and polyoxypropylene is even more preferable.

A polyoxyalkylene-based polymer is a polymer having a repeating unit represented by -R⁹-O-. R⁹ represents a linear or branched alkylene group having 1 to 14 carbon atoms. R⁹ is more preferably a linear or branched alkylene group having 2 to 4 carbon atoms. Examples of the repeating unit represented by -R⁹-O- include -CH₂O-, -CH₂CH₂O-, -CH₂CH(CH₃)O-, - CH₂CH(C₂H₅)O-, -CH₂C(CH₃)(CH₃)O-, -CH₂CH₂CH₂CH₂O-, etc. The main chain structure of the polyoxyalkylene-based polymer may be composed of only one type of repeating unit or may be composed of two or more types of repeating units. In particular, when the curable composition is used for a sealant, an adhesive, or the like, a polyoxypropylene-based polymer having 50% by weight or more, preferably 80% by weight or more, of a repeating unit of oxypropylene as the polymer main chain structure is preferable as the polyoxyalkylene-based polymer. This is because such a polyoxyalkylene-based polymer is amorphous and has a relatively low viscosity.

The main chain structure of the polyoxyalkylene polymer may be linear or branched.

The polyoxyalkylene-based polymer is preferably a polymer obtained by a ring-opening polymerization reaction of a cyclic ether compound, where a polymerization catalyst is used in the presence of an initiator.

Examples of the cyclic ether compound include ethylene oxide, propylene oxide, butylene oxide, tetramethylene oxide, tetrahydrofuran, etc. These cyclic ether compounds may be used alone or in a combination of two or more types thereof. Among these cyclic ether compounds, propylene oxide is particularly preferable because an amorphous polyether polymer having a relatively low viscosity can be obtained.

Examples of the initiator include alcohols such as butanol, ethylene glycol, propylene glycol, propylene glycol monoalkyl ether, butanediol, hexamethylene glycol, neopentyl glycol, diethylene glycol, dipropylene glycol, triethylene glycol, glycerin, trimethylolmethane, trimethylolpropane, pentaerythritol, sorbitol, etc.; polyoxyalkylene-based polymers such as polyoxypropylene diol, polyoxypropylene triol, polyoxyethylene diol, polyoxyethylene triol, etc.

The method for synthesizing the polyoxyalkylene-based polymer is not particularly limited. Examples of the method for synthesizing the polyoxyalkylene-based polymer include: a polymerization method using an alkali catalyst such as KOH; a polymerization method using a transition metal compound-porphyrin complex catalyst such as a complex obtained by reacting an organoaluminum compound and porphyrin, the method being shown in Japanese Unexamined Patent Application Publication No. S61-215623; a polymerization method using a complex metal cyanide complex catalyst as shown in Japanese Examined Patent Application Publication Nos. S46-27250 and S59-15336, U.S. Patent Nos. 3,278,457, 3,278,458, 3,278,459, 3,427,256, 3,427,334, 3,427,335, etc.; a polymerization method using a catalyst composed of a polyphosphazene salt as exemplified in Japanese Unexamined Patent Application Publication No. H10-273512; a polymerization method using a catalyst composed of a phosphazene compound as exemplified in Japanese Unexamined Patent Application Publication No. H11-060722; or the like. The polymerization method using a complex metal cyanide complex catalyst is more preferable because the production cost is low and a polymer having a narrow molecular weight distribution can be obtained.

As the main chain structure of the organic polymer (A), a polyoxyalkylene-based polymer containing a bond other than an ether bond, such as a urethane bond, a urea bond, or the like may be used as long as the desired effect is not significantly impaired. Examples of the polymer having such a main chain structure include a polyurethane prepolymer and a polyurea prepolymer.

The polyurethane prepolymer can be obtained by a known method such as a method of reacting a polyol compound and a polyisocyanate compound. The polyurea prepolymer can be obtained by a known method such as a method of reacting a polyamine compound and a polyisocyanate compound, or the like. The main chain structure may be a prepolymer having a urethane bond and a urea bond in combination, which is obtained by reacting a polyol compound and a polyamine compound with a polyisocyanate compound.

Examples of the polyol compound include a polyether polyol, a polyester polyol, a polycarbonate polyol, a polyether polyester polyol, etc.

Examples of the polyisocyanate compound include diphenylmethane diisocyanate, tolylene diisocyanate, xylylene diisocyanate, methylene-bis(cyclohexylisocyanate), isophorone diisocyanate, hexamethylene diisocyanate, etc.

The terminal of the polyurethane prepolymer may be either a hydroxy group or an isocyanate group. The terminal of the polyurea prepolymer may be either an amino group or an isocyanate group.

In a cured product of a curable composition containing, as the organic polymer (A), a polymer having one or more bonds selected from a urethane bond, a urea bond, or an ester bond in the main chain structure, the strength of the cured product may decrease due to cleavage of the urethane bond, the urea bond, or the ester bond in the main chain structure by heat or the like.

When a polymer containing an amide bond in the main chain structure is used as the organic polymer, the curability of the curable composition may be improved. The amide bond is represented by, for example, -NR¹⁰-C(=O)-. R¹⁰ represents a hydrogen atom or an organic group which may have a substituent. When an amount of the amide bond in the main chain structure is within an appropriate range, the viscosity of the polymer is low, and a decrease in the strength of the cured product due to cleavage of the amide bond by heat or the like and/or an increase in the viscosity of the curable composition due to storage hardly occurs, so that the workability of the curable composition is good.

When the organic polymer (A) contains an amide bond in the main chain structure, an average number of amide bonds per molecule is preferably 1 to 10, more preferably 1.5 to 5, and still more preferably 2 to 3. When the number of amide bonds as the average number per molecule is within such a range, the curable composition has good curability, the viscosity of the organic polymer (A) is low, and handling of the organic polymer (A) and the curable composition is easy.

From the viewpoint of obtaining a curable composition excellent in storage stability and workability, the polymer (A) described above is most preferably a polyoxyalkylene polymer not containing a urethane bond, a urea bond, an ester bond or an amide bond in the main chain structure.

The organic polymer (A) is preferably a polymer obtained by introducing a reactive silicon group into the polymer by any one of the following methods (a) to (d):
(a) a method of converting a terminal hydroxy group of a hydroxy group-terminated organic polymer into a carbon-carbon unsaturated group, and then hydrosilylating the carbon-carbon unsaturated group with hydrosilane represented by HSiR¹X₂, in which R¹ and X are the same as those in the formula (1);
(b) a method of reacting an isocyanate alkylsilane compound represented by OCN-W-SiR¹X₂ with a terminal hydroxy group of a hydroxy group-terminated organic polymer, in which W represents a divalent organic group, and R¹ and X are the same as those in the formula (1);
(c) a method of converting a terminal hydroxy group of a hydroxy group-terminated organic polymer into a carbon-carbon unsaturated group, and then carrying out an ene-thiol reaction between the carbon-carbon unsaturated group and a mercaptoalkylsilane compound represented by HS-W-SiR¹X₂, in which W represents a divalent organic group, and R¹ and X are the same as those in the formula (1); and
(d) a method of reacting a hydroxy group-terminated organic polymer with a polyisocyanate compound to synthesize an NCO group-terminated organic polymer, and then reacting the terminal NCO group with a silane compound represented by HNR¹¹-W-SiR¹X₂ or HS-W-SiR¹X₂,

in which W represents a divalent organic group,
R¹¹ represents a hydrogen atom or an alkyl group, and
R¹ and X are the same as those in formula (1).

In the methods (a) and (c), examples of the terminal carbon-carbon unsaturated group include a vinyl group, an allyl group, a methallyl group, an allenyl group, a propargyl group, etc.

In any one of the methods (b) to (d), the polymer (A) obtained using a silane compound in which W is methylene exhibits extremely high curability.

The method (a) is preferable in that the organic polymer (A) having good storage stability can be easily obtained. The methods (b), (c) and (d) are preferable because a high conversion ratio can be obtained in a relatively short reaction time.

Examples of methods of introducing a reactive silicon group by the method (a) include a method proposed in each of the following publications such as Japanese Examined Patent Application, Publication Nos. S45-36319 and S46-12154, Japanese Unexamined Patent Application, Publication Nos. S50-156599, S54-6096, S55-13767, S55-13468, S57-164123, and H3-2450, U.S. Patent Nos. 3,632,557, 4,345,053, 4,366,307, 4,960,844, etc.; a method of introducing a reactive silicon group by hydrosilylation or the like into a polyoxypropylene polymer having a high molecular weight of 6,000 or more and a narrow molecular weight distribution having Mw/Mn of 1.6 or less, the method being proposed in Japanese Unexamined Patent Application, Publication Nos. S61-197631, S61-215622, S61-215623, and S61-218632; and a method proposed in Japanese Unexamined Patent Application, Publication No. H3-72527.

The number average molecular weight of the organic polymer (A) is not particularly limited. The number average molecular weight of the organic polymer (A) is preferably 3,000 to 100,000, more preferably 3,000 to 50,000, and particularly preferably 3,000 to 30,000 in terms of polystyrene equivalent molecular weight in GPC. When the number average molecular weight is within the above range, an introduction amount of the reactive silicon group is appropriate, and thus the organic polymer (A) having a viscosity that is easy to handle and excellent in workability can be easily obtained while the production cost being suppressed within an appropriate range.

The molecular weight of the organic polymer (A) can be expressed also as a terminal group equivalent molecular weight. The terminal group equivalent molecular weight is determined as follows: before introduction of reactive silicon groups, a polymer precursor is subjected to titration analysis based on the principles of the hydroxy value measurement method as specified in JIS K 1557 and the iodine value measurement method as specified in JIS K 0070 to directly measure the terminal group concentration, based on which the terminal group equivalent molecular weight is calculated taking into account the polymer structure (in particular, a degree of branching which depends on the polymerization initiator used). The terminal group equivalent molecular weight of the organic polymer (A) can be determined also by creating a calibration curve of the number-average molecular weight of the polymer precursor as determined by common GPC measurement and the terminal group equivalent molecular weight, and converting the number-average molecular weight of the organic polymer (A) determined by GPC to the terminal group equivalent molecular weight.

The molecular weight distribution (Mw/Mn) of the organic polymer (A) is not particularly limited. The molecular weight distribution of the organic polymer (A) is preferably narrow. Specifically, the molecular weight distribution is preferably 1.6 or less, more preferably 1.4 or less, still more preferably 1.3 or less, and particularly preferably 1.2 or less. The molecular weight distribution of the organic polymer (A) can be determined from the number average molecular weight and the weight average molecular weight obtained by GPC measurement.

In order to obtain a good rubber-like cured product, the reactive silicon group of the organic polymer (A) is preferably present at the polymer chain terminal. The number of reactive silicon groups per polymer chain terminal is preferably 0.5 or more, more preferably 0.6 or more, still more preferably 0.7 or more, and particularly preferably 0.8 or more. When the number of reactive silicon groups is 0.5 or more, the curability of the organic polymer (A) and the curable composition is good, and the cured product of the curable composition has good rubber elasticity.

The number of reactive silicon groups in one molecule is preferably 1 to 7, more preferably 1 to 4, and particularly preferably 1 to 3 on average.

As described in WO2013/180203, an organic polymer having two or more reactive silicon groups at a polymer chain terminal can also be used as the organic polymer (A). Such an organic polymer (A) exhibits high curability, and the resulting cured product can be expected to have high strength and high resilience.

Examples of commercially available products of the organic polymer (A) include various reactive silicon group-containing polyoxypropylene products such as Kaneka MS Polymer^{®}, KANEKA SILYL^{®}, etc., reactive silicon group-containing poly(meth)acrylate products such as Kaneka TA Polymer^{®}, KANEKA XMAP^{®}, etc., reactive silicon group-containing polyisobutylene products such as EPION^{®}, or the like. All of these commercially available organic polymers (A) are products of Kaneka Corporation.

### <Curing Catalyst (B)>

The curable composition contains a curing catalyst (B) that cures the organic polymer (A) by hydrolysis condensation. The curing catalyst (B) includes an amidine compound (b1) and a titanium compound (b2).

### (Amidine Compound (b1))

The amidine compound (b1) is a compound represented by the following formula (2):

R²N=CR³-NR⁴₂ (2)

In the formula (2), R², R³, and R⁴ each represent a hydrogen atom or a hydrocarbon group having 1 to 20 carbon atoms which may have a substituent. Two R⁴ groups may be the same or different. Any two of R², R³, and two R⁴ groups may be bonded to each other to form a ring. When the hydrocarbon groups which may have a substituent are bonded to each other to form a ring, one hydrogen atom is removed from each of two hydrocarbon groups which may have a substituent, and atoms to which the hydrogen atoms removed from the hydrocarbon groups which may have a substituent were bonded are linked by a single bond to form a ring. When the hydrocarbon group has a substituent, a hydrogen atom bonded to a hetero atom such as a nitrogen atom or an oxygen atom contained in the substituent may be removed. A case where a hydrogen atom and a hydrocarbon group which may have a substituent are bonded to form a ring will be explained by using a case where R³ is a hydrogen atom and R⁴ is a hydrocarbon group which may have a substituent as an example. In this case, a hydrogen atom as R³ and a hydrogen atom on the hydrocarbon group which may have a substituent are removed, and the carbon atom to which the hydrogen atom as R³ was bonded and an atom to which the removed hydrogen atom on the hydrocarbon group as R⁴ which may have a substituent was bonded are linked by a single bond to form a ring. When any two of R², R³, and two R⁴ groups are bonded to form a ring, for example, R² and one R⁴ may be bonded to each other to form a ring, and R³ and the other R⁴ also may be bonded to each other to form a ring. Alternatively, R² and R³ may form a ring, and the two R⁴ groups also may form a ring.

The hydrocarbon group as R², R³, or R⁴ may have a substituent. Examples of the substituent that the hydrocarbon group as R², R³, or R⁴ may have include a halogen atom, an amino group, an alkylamino group having 1 to 4 carbon atoms, a dialkylamino group having 2 to 4 carbon atoms, an alkoxy group having 1 to 4 carbon atoms, and a hydroxy group. The number of carbon atoms of the hydrocarbon group as R², R³, or R⁴ excluding the number of carbon atoms of the substituent is preferably 1 to 12, more preferably 1 to 6, and still more preferably 1 to 4. Examples of hydrocarbon groups as R², R³, of R⁴ are the same as the examples of the hydrocarbon groups as R¹ described above. A group in which the group exemplified as the hydrocarbon group as R¹ is substituted with the above substituent is also preferable. Examples of rings formed by two of R², R³, and two R⁴ groups binding to each other include a five-membered ring, a six-membered ring, and a seven-membered ring, and a six-membered ring or a seven-membered ring is preferable. As the amidine compound (b1), an amidine containing at least one ring structure (that is, a cyclic amidine) is preferable, and a cyclic amidine containing two ring structures (that is, a bicyclic amidine) is more preferable.

Examples of the amidine compound include cyclic amidines such as 1,2-dimethyl-1,4,5,6-tetrahydropyrimidine, 1-ethyl-2-methyl-1,4,5,6-tetrahydropyrimidine, 1,2-diethyl-1,4,5,6-tetrahydropyrimidine, 1-n-propyl-2-methyl-1,4,5,6-tetrahydropyrimidine, 1-isopropyl-2-methyl-1,4,5,6-tetrahydropyrimidine, 1-ethyl-2-n-propyl-1,4,5,6-tetrahydropyrimidine, 1-ethyl-2-isopropyl-1,4,5,6-tetrahydropyrimidine, etc.; bicyclic amidines such as DBU (1,8-diazabicyclo[5.4.0]-7-undecene), DBN (1,5-diazabicyclo[4.3.0]-5-nonene), etc.; guanidines, such as guanidine, dicyandiamide, 1-methylguanidine, 1-ethylquanidine, 1-cyclohexylguanidine, 1-phenylguanidine, 1-(o-tolyl) guanidine, 1,1-dimethylguanidine, 1,3-dimethylguanidine, 1,2-diphenylguanidine, 1,1,2-trimethylguanidine, 1,2,3-trimethylguanidine, 1,1,3,3-tetramethylguanidine, 1,1,2,3,3-pentamethylguanidine, 2-ethyl-1,1,3,3-tetramethylguanidine, 1,1,3,3-tetramethyl-2-n-propylguanidine, 1,1,3,3-tetramethyl-2-isopropylguanidine, 2-n-butyl-1,1,3,3-tetramethylguanidine, 2-tert-butyl-1,1,3,3-tetramethylguanidine, 1,2,3-tricyclohexylguanidine, 1-benzyl-2,3-dimethylguanidine, 1,5,7-triazabicyclo[4.4.0]dec-5-ene, 7-methyl-1,5,7-triazabicyclo[4.4.0]dec-5-ene, 7-ethyl-1,5,7-triazabicyclo[4.4.0]dec-5-ene, 7-n-propyl-1,5,7-triazabicyclo[4.4.0]dec-5-ene, 7-isopropyl-1,5,7-triazabicyclo[4.4.0]dec-5-ene, 7-n-butyl-1,5,7-triazabicyclo[4.4.0]dec-5-ene, 7-cyclohexyl-1,5,7-triazabicyclo[4.4.0]dec-5-ene, 7-n-octyl-1,5,7-triazabicyclo[4.4.0]dec-5-ene, etc.; biguanide compounds such as 1-methylbiguanide, 1-ethylbiguanide, 1-n-butylbiguanide, 1-(2-ethylhexyl)biguanide, 1-n-octadecylbiguanide, 1,1-dimethylbiguanide, 1,1-diethylbiguanide, 1-cyclohexylbiguanide, 1-allylbiguanide, 1-phenylbiguanide, 1-(o-tolyl)biguanide, 1-morpholinobiguanide, 1-n-butyl-N2-ethylbiguanide, 1,1'-ethylenebisbiguanide, 1,5-ethylenebiguanide, 1-[3-(diethylamino)propyllbiguanide, 1-[3-(dibutylamino)propyl]biguanide, N',N"-dihexyl-3,12-diimino-2,4,11,13-tetraazatetradecanediamidine, etc. or the like.

From the viewpoint of non-bleeding properties, a used amount of the amidine compound (b1) is preferably 0.1 to 4.0 parts by weight, more preferably 0.2 to 3.0 parts by weight, and still more preferably 0.3 to 2.0 parts by weight with respect to 100 parts by weight of the organic polymer (A).

### (Titanium Compound (b2))

The titanium compound (b2) is a compound represented by the following formula (3):

Ti(OR⁵)_{d}Y_{4-d} (3)

In the formula (3), R⁵ represents a hydrocarbon group having 1 to 20 carbon atoms which may have a substituent. Y is a chelate coordination compound.
d is an integer of 0 to 4. The hydrocarbon group as R⁵ may be an aliphatic hydrocarbon group or an aromatic hydrocarbon group. When the hydrocarbon group as R⁵ is an aliphatic hydrocarbon group, the aliphatic hydrocarbon group may have one or more unsaturated bonds. When the hydrocarbon group as R⁵ is an aliphatic hydrocarbon group, the structure of the aliphatic hydrocarbon group may be linear, branched, cyclic, or a combination of these structures. The hydrocarbon group as R⁵ may have a substituent. The hydrocarbon group as R⁵ preferably has no substituent. Examples of the substituent which the hydrocarbon group as R⁵ may have are the same as those of the substituent which the hydrocarbon group as R², R³, or R⁴ may have. The number of carbon atoms of the hydrocarbon group as R⁵ is preferably 1 to 12, more preferably 1 to 6, and still more preferably 1 to 4. The hydrocarbon group as R⁵ is preferably a methyl group, an ethyl group, an n-propyl group, an isopropyl group, an n-butyl group, an isobutyl group, a sec-butyl group, a tert-butyl group, or a phenyl group.

As the chelate coordination compound as Y, a bidentate organic ligand is preferable. Chelate coordination compounds include β-diketones and β-ketoesters. Examples of the β-diketones include acetylacetone (ACAC), trifluoroacetylacetone, hexafluoroacetylacetone, benzoylacetone, thenoyltrifluoroacetone, dipivaloylmethane, dibenzoylmethane, and ascorbic acid. Examples of the β-ketoesters include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate.

Examples of the titanium compound (b2) include titanium tetramethoxide, titanium trimethoxide ethoxide, titanium trimethoxide isopropoxide, titanium trimethoxide butoxide, titanium dimethoxide diethoxide, titanium dimethoxide diisopropoxide, titanium dimethoxide dibutoxide, titanium methoxide triethoxide, titanium methoxide triisopropoxide, titanium methoxide tributoxide, titanium tetraethoxide, titanium triethoxide isopropoxide, titanium triethoxide butoxide, titanium diethoxide diisopropoxide, titanium diethoxide dibutoxide, titanium ethoxide triisopropoxide, titanium ethoxide tributoxide, titanium tetraisopropoxide, titanium triisopropoxide butoxide, titanium diisopropoxide dibutoxide, titanium tetrabutoxide, titanium tetra-tert-butoxide, titanium bis(acetylacetonato) diisopropoxide, titanium bis(ethylacetoacetate) diisopropoxide, titanium bis(ethylacetoacetate) diisobutoxide, etc. A condensate thereof can also be used as the titanium compound (b2). From the viewpoint of obtaining good curability, titanium tetraalkoxide is preferable, and titanium tetraisopropoxide is particularly preferable.

From the viewpoint of availability, compatibility with the organic polymer (A), and curability, titanium tetraisopropoxide, titanium tetra-tert-butoxide, titanium bis(acetylacetonato) diisopropoxide, titanium bis(ethylacetoacetate) diisobutoxide, and titanium bis(ethylacetoacetate) diisopropoxide are more preferable, and titanium bis(ethylacetoacetate) diisobutoxide and titanium bis(ethylacetoacetate) diisopropoxide are particularly preferable. As the titanium compound (b2), either a single component or a combination of a plurality of components may be used. As the titanium compound (b2), either a single component or a combination of a plurality of components may be used. Note that the titanium compound (b2) and the amidine compound (b1) may be separately added to the curable composition, or may be added to the curable composition as a mixture in which both are mixed in advance.

From the viewpoint of fast curability and low yellowing property, a used amount of the titanium compound (b2) is preferably 0.1 to 5.0 parts by weight, more preferably 0.5 to 4.5 parts by weight, and still more preferably 1.0 to 4.0 parts by weight with respect to 100 parts by weight of the organic polymer (A). A ratio (b2)/(b1), a weight ratio of the titanium compound (b2) to the amidine compound (b1) is preferably 1.0 to 10, and more preferably 1.0 to 5.0.

### <Silane Condensate (C)>

The silane condensate (C) is a compound having a structure represented by the following formula (4):

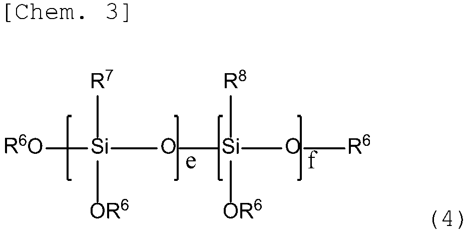

In the formula (4), R⁶ represents a methyl group or an ethyl group. R⁶ groups may be the same or different. R⁷ and R⁸ each represent a hydrocarbon group having 1 to 20 carbon atoms which may have a substituent. R⁷ and R⁸ may be the same or different.
e and f each represent an integer of 1 to 50.

The silane condensate (C) can be obtained by condensing a silane compound monomer having a hydrolyzable silicon group, followed by oligomerization or polymerization. Examples of the silane compound monomer that forms the silane condensate (C) include vinyltrialkoxysilanes such as vinyltrimethoxysilane, vinyltriethoxysilane, etc.; allyltrialkoxysilanes such as allyltrimethoxysilane, allyltriethoxysilane, etc.; amino group-containing trialkoxysilanes such as γ-aminopropyltrimethoxysilane, γ-aminopropyltriethoxysilane, γ-(2-aminoethyl)aminopropyltrimethoxysilane, γ-(2-aminoethyl)aminopropyltriethoxysilane, γ-(2-(2-aminoethyl) aminoethyl) aminopropyltrimethoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-phenylaminomethyltrimethoxysilane, N-butylaminopropyltrimethoxysilane, (2-aminoethyl)aminomethyltrimethoxysilane, etc.; alkyltrialkoxysilanes such as methyltrimethoxysilane, methyltriethoxysilane, ethyltrimethoxysilane, ethyltriethoxysilane, n-propyltrimethoxysilane, n-propyltriethoxysilane, isopropyltrimethoxysilane, isopropyltriethoxysilane, etc.; cycloalkyltrialkoxysilanes such as cyclohexyltrimethoxysilane, cyclohexyltriethoxysilane, cycloheptyltrimethoxysilane, cycloheptyltriethoxysilane, 2-methylcyclohexyltrimethoxysilane, 2-methylcyclohexyltriethoxysilane, 3-methylcyclohexyltrimethoxysilane, 3-methylcyclohexyltriethoxysilane, 4-methylcyclohexyltrimethoxysilane, 4-methylcyclohexyltriethoxysilane, etc.; aryltrialkoxysilanes such as phenyltrimethoxysilane, phenyltriethoxysilane, 1-naphthyltrimethoxysilane, 1-naphthyltriethoxysilane, etc.; aralkyltrialkoxysilanes such as benzyltrimethoxysilane, benzyltriethoxysilane, phenethyltrimethoxysilane, phenethyltriethoxysilane, etc. or the like. Among these, it is preferable to form the silane condensate (C) by using at least one trialkoxysilane selected from a vinyltrialkoxysilane, an amino group-containing trialkoxysilane or an alkyltrialkoxysilane, and it is more preferable to form the silane condensate (C) by using at least one trimethoxysilane selected from a vinyltrimethoxysilane, an amino group-containing trimethoxysilane or an alkyltrimethoxysilane.

Examples of the silane condensate (C) include Dynasylan 6490, Dynasylan 6498, Dynasylan 1146, etc. from Evonik.

When the silane condensate (C) is added to the curable composition, the curable composition cures faster than when a silane compound monomer is added to the curable composition.

From the viewpoint of fast curability, a used amount of the silane condensate (C) is preferably 0.1 to 20 parts by weight, more preferably 0.3 to 15 parts by weight, and still more preferably 0.5 to 10 parts by weight with respect to 100 parts by weight of the organic polymer (A). The curable composition may contain, together with the silane condensate (C), a silane coupling agent (silane compound), which is used as an adhesion-imparting agent, a physical property-adjusting agent, a dehydrating agent, or the like to be described later. The silane coupling agent typically corresponds to the silane compound monomer described above. When the curable composition contains a silane coupling agent, a used amount of the silane condensate (C) is preferably 20% by mass or more, more preferably 30% by mass or more, still more preferably 40% by mass or more, still more preferably 50% by mass or more, and particularly preferably 70% by mass or less, with respect to the total of the mass of the silane condensate (C) and the mass of the silane coupling agent. From the viewpoint of fast curability, the curable composition preferably does not contain a silane coupling agent.

### <Other Additives>

The curable composition may contain additives other than the organic polymer (A), the curing catalyst (B), and the silane condensate (C) as long as the desired effects are not impaired. Examples of the other additives include a silanol condensation catalyst other than the curing catalyst (B), a filler, an adhesion-imparting agent, a plasticizer, a solvent, a diluent, a thixotropy-imparting agent, an antioxidant, a light stabilizer, an ultraviolet absorber, a physical property adjusting agent, a tackifier resin, a compound containing an epoxy group, a photocurable substance, an oxygen-curable substance, an epoxy resin, other resins, a surface modifier, a foaming agent, a curing modifier, a flame retardant, a silicate, a radical inhibitor, a metal deactivating agent, a phosphorus-based peroxide decomposing agent, a lubricant, a pigment, a fungicide, etc.

### (Silanol Condensation Catalysts)

The curable composition may contain a silanol condensation catalyst other than the curing catalyst (B) for the purpose of promoting a hydrolysis condensation reaction between reactive silicon groups of the organic polymer (A) to extend or crosslink the polymer. Examples of the silanol condensation catalyst include an organotin compound, a metal carboxylate, an amine compound, a carboxylic acid, a metal alkoxide, an inorganic acid, etc. The silanol condensation catalyst may be used in combination with two or more different catalysts. A used amount of the silanol condensation catalyst is preferably 0.001 to 20 parts by weight, more preferably 0.01 to 15 parts by weight, and particularly preferably 0.01 to 10 parts by weight with respect to 100 parts by weight of the organic polymer (A).

### (Fillers)

Various fillers may be incorporated into the curable composition. The fillers include reinforcing fillers such as fumed silica, precipitated silica, crystalline silica, fused silica, dolomite, anhydrous silicic acid, hydrous silicic acid, carbon black, etc.; fillers such as ground calcium carbonate, colloidal calcium carbonate, magnesium carbonate, diatomaceous earth, calcined clay, clay, talc, titanium oxide, bentonite, organic bentonite, ferric oxide, aluminum fine powder, flint powder, zinc oxide, active zinc oxide, resin powder, etc.; fibrous fillers such as asbestos, glass fibers, and filaments; or the like. Examples of the resin powder include PVC powder, PMMA powder, etc. When a filler is used, a used amount of the filler is preferably 1 to 300 parts by weight, and more preferably 10 to 200 parts by weight, with respect to 100 parts by weight of the organic polymer (A).

When it is desired to obtain a cured product having high strength by using these fillers, a filler selected mainly from fumed silica, precipitated silica, crystalline silica, fused silica, dolomite, anhydrous silicic acid, hydrous silicic acid, carbon black, surface-treated fine calcium carbonate, calcined clay, clay, active zinc oxide, or the like can be preferably used. A used amount thereof is preferably 1 to 200 parts by weight with respect to 100 parts bv weight of the organic polymer (A). When it is desired to obtain a cured product having a low strength and a large elongation at break, a preferable result can be obtained by using a filler selected mainly from titanium oxide, calcium carbonate, magnesium carbonate, talc, ferric oxide, zinc oxide, silas balloon or the like in a range of 5 to 200 parts by weight with respect to 100 parts by weight of the organic polymer (A).

The curable composition may contain a spherical hollow body such as a balloon for the purpose of reducing weight (lowering the specific gravity) of the cured product. A balloon is a spherical filler with a hollow interior. Examples of the material of the balloon include inorganic materials such as glass, silas, silica, etc. and organic materials such as a phenol resin, a urea resin, polystyrene, saran, acrylonitrile, etc. The material for the balloon is not limited to these materials. The material for the balloon may be a composite material composed of an inorganic material and an organic material. Alternatively, a plurality of layers may be stacked as the material for the balloon. One type of balloon may be used alone, or two or more types of balloons may be used in combination. A surface of the balloon may be surface-treated, coated, or treated with various surface treatment agents. For example, an organic balloon coated with calcium carbonate, talc, titanium oxide, or an inorganic balloon surface-treated with a silane coupling agent can be used.

The particle size of the balloon is preferably 3 to 200 µm, and particularly preferably 10 to 110 µm. When the particle size of the balloon is within the above range, the weight of the cured product can be reduced to a desired level by using an appropriate amount of balloons, and the cured product can be formed while suppressing occurrence of irregularities on the surface and a decrease in elongation.

A used amount of the spherical hollow body (balloon) is preferably 0.01 to 30 parts by weight with respect to 100 parts by weight of the organic polymer (A). The lower limit is more preferably 0.1 part by weight, and the upper limit is more preferably 20 parts by weight. When the spherical hollow body is used in an amount within the above range, workability can be improved while maintaining elongation and breaking strength of the cured product.

### (Adhesion-Imparting Agent)

The curable composition may contain an adhesion-imparting agent. Examples of the adhesion-imparting agent include a silane coupling agent that does not correspond to the silane condensate (C) described above. The silane coupling agent is a compound having a hydrolyzable silicon group and a functional group other than the hydrolyzable silicon group in the molecule. When a curable composition containing a silane coupling agent is applied to various adherends which are inorganic base materials such as glass, aluminum, stainless steel, zinc, copper, mortar, etc. or organic base materials such as vinyl chloride, acrylic, polyester, polyethylene, polypropylene, polycarbonate, etc., a remarkable adhesion improving effect is exhibited under non-primer conditions or primer treatment conditions. When the curable composition is used under non-primer conditions, the effect of improving adhesion to various adherends is particularly remarkable. In addition to the above-described functions, the silane coupling agent may function as a dehydrating agent, a physical property adjusting agent, a dispersibility improving agent for inorganic fillers, or the like.

The hydrolyzable group in the hydrolyzable silicon group of the silane coupling agent is not particularly limited. Examples of the hydrolyzable group include a hydrogen atom, a halogen atom, an alkoxy group, an aryloxy group, an alkenyloxy group, an acyloxy group, a ketoxymate group, an amino group, an amide group, an acid amide group, an aminooxy group, a mercapto group, etc. Among these, a halogen atom, an alkoxy group, an alkenyloxy group, and an aryloxy group are preferable in terms of high activity. A chlorine atom and an alkoxy group are preferable because they can be easily introduced into the silane coupling agent. An alkoxy group such as a methoxy group or an ethoxy group is more preferable, and a methoxy group and an ethoxy group are particularly preferable because of their mild hydrolyzabilitv and easy handling. An ethoxy and isopropenyloxy group eliminate ethanol and acetone in the reaction, respectively, and thus are preferable, from the viewpoint of safety. The number of hydrolyzable groups bonded to the silicon atom in the silane coupling agent is preferably three in some cases in order to ensure good adhesion. In addition, in order to secure storage stability of the curable composition, two may be preferable.

When the silane coupling agent is used as the adhesion-imparting agent, an aminosilane coupling agent having a hydrolyzable silicon group and a substituted or unsubstituted amino group is preferable because the effect of improving adhesion is large. The substituent in the substituted amino group is not particularly limited. Examples of the substituent include an alkyl group, an aralkyl group, and an aryl group.

Examples of the aminosilane coupling agent include: amino group-containing silanes, such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, v-(2-(2-aminoethyl) aminoethyl) aminopropyltrimethoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, N-butylaminopropyltrimethoxysilane, (2-aminoethyl)aminomethyltrimethoxysilane, N,N'-bis[3-(trimethoxysilyl)propyl]ethylenediamine, bis(trimethoxysilylpropyl)amine, etc.; and ketimine-type silanes such as N-(1,3-dimethylbutylidene)-3-(triethoxysilyl)-1-propanamine, etc.

Among these, γ-aminopropyltrimethoxysilane, γ-(2-aminoethyl)aminopropyltrimethoxysilane, and γ-(2-aminoethyl)aminopropylmethyldimethoxysilane are preferable in order to obtain good adhesion of the cured product. The aminosilane coupling agent may be used alone or in combination of two or more types thereof. γ-(2-aminoethyl)aminopropyltrimethoxysilane is pointed out to be more irritating than other aminosilanes. Instead of reducing an amount of γ-(2-aminoethyl)aminopropyltrimethoxysilane, γ-aminopropyltrimethoxysilane may be used in combination to alleviate irritation. In order to ensure good storage stability of the curable composition, γ-aminopropyltrimethoxysilane and γ-(2-aminoethyl)aminopropylmethyldimethoxysilane are preferable.

Examples of silane coupling agents other than the aminosilane coupling agent include epoxy group-containing silane coupling agents such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, β-(3,4-epoxycyclohexyl)ethyltriethoxysilane, etc.; isocyanato group-containing silane coupling agents such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, (isocyanatomethyl)dimethoxymethylsilane, etc.; mercapto group-containing silane coupling agents such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltriethoxysilane, etc.; carboxvsilane coupling agents such as β-carboxyethyltriethoxysilane, β-carboxyethylphenylbis(2-methoxyethoxy)silane, N-β-(carboxymethyl)aminoethyl-γ-aminopropyltrimethoxysilane, etc.; vinyl-type unsaturated group-containing silane coupling agents such as vinyltrimethoxysilane, vinyltriethoxysilane, γ-methacryloyloxypropylmethyldimethoxysilane, γ-acryloyloxypropylmethyltriethoxysilane, etc.; halogen-containing silane coupling agents such as γ - chloropropyltrimethoxysilane, etc.; isocyanurate silane coupling agents such as tris(trimethoxysilyl)isocyanurate, etc.; or the like.

Among these, γ-glycidoxypropyltrimethoxysilane, γ-glycidoxypropyltriethoxysilane, and γ-glycidoxypropylmethyldimethoxysilane are preferable in order to obtain good adhesion of the cured product.

The silane coupling agent may be used alone or in an admixture of two or more types thereof. A used amount of the silane coupling agent is not particularly limited as long as the desired effect is not impaired. The used amount of the silane coupling agent is preferably 0.1 to 20 parts by weight, and more preferably 0.5 to 10 parts by weight, with respect to 100 parts by weight of the organic polymer (A).

### (Plasticizers)

The curable composition may include a plasticizer. By adding a plasticizer, viscosity and slumping properties of the curable composition and mechanical properties such as tensile strength and elongation of the cured product can be adjusted.

Examples of the plasticizer include phthalate compounds other than phthalate (B) such as dibutyl phthalate, diisononyl phthalate (DINP), diheptyl phthalate, di(2-ethylhexyl) phthalate, diisodecyl phthalate (DIDP), butylbenzyl phthalate, etc.; terephthalate compounds such as bis(2-ethylhexyl)-1,4-benzenedicarboxylate, etc.; non-phthalate compounds such as diisononyl 1,2-cyclohexanedicarboxylate; aliphatic polycarboxylate compounds such as dioctyl adipate, dioctyl sebacate, dibutyl sebacate, diisodecyl succinate, tributyl acetyl citrate, etc.; unsaturated fatty acid ester compounds such as butyl oleate methyl acetyl ricinoleate, etc.; phenyl alkylsulfonates; phosphate compounds such as tricresyl phosphate, tributyl phosphate, etc.; trimellitate compounds; chlorinated paraffins; hydrocarbon oils such as alkyldiphenyl, partially hydrogenated terphenyl, etc.; process oils; epoxy plasticizers such as epoxidized soybean oil, benzyl epoxystearate. Examples of the terephthalate compounds include EASTMAN 168 (trade name, manufactured by EASTMAN CHEMICAL). Examples of the non-phthalate compounds include Hexamoll DINCH (trade name, manufactured by BASF). Examples of the phenyl alkylsulfonate include Mesamoll (trade name, manufactured by LANXESS).

Polymeric plasticizers may also be used. When the polymer plasticizer is used, the initial physical properties of the cured product can be maintained for a longer period of time as compared with the case where a low molecular weight plasticizer is used. Further, drying properties (coating properties) when an alkyd coating material is applied to the cured product is improved.

Examples of the polymer plasticizer include a vinyl-based polymer which is a polymer of a vinyl-based monomer; esters of polyalkylene glycols and/or polyols, such as diethylene glycol dibenzoate, triethylene glycol dibenzoate, pentaerythritol esters, etc.; polyester-based plasticizers obtained from dibasic acids such as sebacic acid, adipic acid, azelaic acid, phthalic acid, etc. and divalent alcohols such as ethylene glycol, diethylene glycol, triethylene glycol, propylene glycol, dipropylene glycol, etc.; polyether polyols such as polyethylene glycol, polypropylene glycol, polytetramethylene glycol, etc. having a number average molecular weight of 500 or more, and further 1,000 or more; derivatives obtained by converting hydroxy groups of these polyether polyols into ester groups, ether groups, etc.; polystyrenes such as polystyrene, poly-α-methylstyrene, etc.; polybutadiene, polybutene, polyisobutylene, butadiene-acrylonitrile, polychloroprene, etc. The polymer plasticizer is not limited thereto.

The polymer plasticizer is preferably compatible with the organic polymer (A). From this viewpoint, polyethers and vinyl-based polymers are preferable. When a polyether is used as the plasticizer, surface curability and deep curability are improved, and curing delay does not occur after storage. Among the polyethers, polypropylene glycol is more preferable. The vinyl-based polymer is preferable from the viewpoint of compatibility with the polymer (A) and weather resistance and heat resistance of the cured product. Among the vinyl polymers, acrylic polymers and/or methacrylic polymers are preferable, and acrylic polymers such as alkyl polyacrylates are more preferable. As a synthesis method of the vinyl-based polymer, a living radical polymerization method is preferable, and an atom transfer radical polymerization method is more preferable because a polymer having a narrow molecular weight distribution and a low viscosity can be obtained. In addition, a so-called SGO process disclosed in Japanese Unexamined Patent Application, Publication No. 2001-207157 is preferable as the method for producing the vinyl-based polymer. The SGO process includes continuous mass-polymerization of an alkyl acrylate-based monomer at a high temperature and a high pressure.

A number average molecular weight of the polymer plasticizer is preferably 500 to 15,000, more preferably 800 to 10,000, still more preferably 1,000 to 8,000, particularly preferably 1,000 to 5,000, and most preferably 1,000 to 3,000. When the number average molecular weight of the polymer plasticizer is within the above range, initial physical properties of the cured product can be maintained for a long period of time while preventing the plasticizer from flowing out of the cured product over time due to heat, rainfall, or the like, the curable composition has an appropriate viscosity, and the workability of the curable composition is good. The molecular weight distribution of the polymer plasticizer is not particularly limited, but is preferably narrow. Specifically, the molecular weight distribution is preferably less than 1.80, more preferably 1.70 or less, still more preferably 1.60 or less, still more preferably 1.50 or less, particularly preferably 1.40 or less, and most preferably 1.30 or less.

The number average molecular weight of the vinyl polymer is measured by a GPC method. The number average molecular weight of the polyether-based polymer is measured by a terminal group analysis method. The molecular weight distribution (Mw/Mn) is measured by the GPC method (in terms of polystyrene).

The polymer plasticizer may or may not have reactive silicon groups. When the polymer plasticizer has a reactive silicon group, the polymer plasticizer acts as a reactive plasticizer, and migration of the plasticizer from the cured product can be prevented. When the polymer plasticizer has a reactive silicon group, a number of reactive silicon groups is preferably 1 or less, and more preferably 0.8 or less on average per molecule. When a plasticizer having a reactive silicon group, particularly a polyether-based polymer having a reactive silicon group, is used, the number average molecular weight thereof needs to be lower than that of the organic polymer (A).

A used amount of the plasticizer is preferably 5 to 150 parts by weight, more preferably 10 to 120 parts by weight, and still more preferably 20 to 100 parts by weight with respect to 100 parts by weight of the organic polymer (A). When the used amount of the plasticizer is within the above range, a cured product excellent in mechanical strength can be formed, while enjoying a desired effect by the use of the plasticizer. The plasticizers may be used alone or in combination of two or more thereof. A low molecular weight plasticizer and a polymer plasticizer may be used in combination. These plasticizers may be blended in the organic polymer (A) when producing the polymer (A).

### (Solvent and Diluent)

The curable composition may contain a solvent or a diluent. The solvent and the diluent are not particularly limited. Examples of the solvent and the diluent include aliphatic hydrocarbons, aromatic hydrocarbons, alicyclic hydrocarbons, halogenated hydrocarbons, alcohols, esters, ketones, ethers, etc. When a solvent or a diluent is used, the boiling point of the solvent is preferably 150°C or higher, more preferably 200°C or higher, and particularly preferably 250°C or higher, in view of the problem of air pollution when the curable composition is used indoors. The solvent or diluent may be used alone or in combination of two or more types thereof.

### (Thixotropy-Imparting Agent)

The curable composition may contain a thixotropy-imparting agent, if necessary, in order to prevent sagging and improve workability. The thixotropy-imparting agent is not particularly limited. Examples of the thixotropy-imparting agent include polyamide waxes; hydrogenated castor oil derivatives, metal soaps such as calcium stearate, aluminum stearate, barium stearate, etc., or the like. Examples of the trade names include Dispalon 6500, Dispalon 308, Dispalon 6300, Crayvallac SL, Crayvallac SLT, etc. These thixotropy-imparting agents may be used alone or in combination of two or more types thereof. A used amount of the thixotropy-imparting agent is preferably 0.1 to 20 parts by weight with respect to 100 parts by weight of the polymer (A).

### (Antioxidants)

The curable composition may contain an antioxidant (anti-aging agent). When an antioxidant is used, weather resistance of the cured product can be enhanced. Examples of the antioxidant include a hindered phenol-based compound, a monophenol-based compound, a bisphenol-based compound, and a polyphenol-based compound, and a hindered phenol-based compound is particularly preferable. Examples of the antioxidant include Irganox 245, Irganox 1010, Irganox 1035, Irganox 1076, Irganox 1135, Irganox 1330, and Irganox 1520 (all of which are manufactured by BASF); SONGNOX1076 (manufactured by SONGWON); and BHT. The following hindered amine-based light stabilizers may be also used: Tinubin 622LD, Tinubin 144, Tinubin 292, CHIMASSORB 944LD, CHIMASSORB 119FL (all of which are manufactured by BASF); AdecaStab LA-57, AdecaStab LA-62, AdecaStab LA-67, AdecaStab LA-63, and AdecaStab LA-68 (all of which are manufactured by ADEKA Corporation); Sanol LS-2626, Sanol LS-1114, Sanol LS-744 (all of which are manufactured by Sankyo Life Tech Co., Ltd.); Nocrack CD (manufactured by Ouchi Shinko Chemical Industrial Co., Ltd.). In addition, antioxidants such as SONGNOX 4120, Naugard 445, OKABEST CLX050, etc. can also be used. Examples of the antioxidants are also described in Japanese Unexamined Patent Application, Publication Nos. H4-283259 and H9-194731. A used amount of the antioxidant is preferably 0.1 to 10 parts by weight, and more preferably 0.2 to 5 parts by weight, with respect to 100 parts by weight of the polymer (A).

### (Light Stabilizers)

The curable composition may include a light stabilizer. When a light stabilizer is used, photooxidative degradation of the cured product can be prevented. Examples of the light stabilizers include a benzotriazole-based compound, a hindered amine-based compound, a benzoate-based compound, etc. As the light stabilizer, a hindered amine-based compound is particularly preferable. A used amount of the light stabilizer is preferably 0.1 to 10 parts by weight, and more preferably 0.2 to 5 parts by weight, with respect to 100 parts by weight of the polymer (A). Examples of the light stabilizer are described in, for example, Japanese Unexamined Patent Application, Publication No. H9-194731.

When a photocurable substance is blended in the curable composition, particularly when an unsaturated acrylic compound is used, it is preferable to use a tertiary amine-containing hindered amine-based light stabilizer as the hindered amine-based light stabilizer in order to improve storage stability of the curable composition, as described in Japanese Unexamined Patent Application, Publication No. H5-70531. As the tertiary amine-containing hindered amine-based light stabilizer, the following may be exemplified: Tinubin 123, Tinubin 144, Tinubin 249, Tinubin 292, Tinubin 312, Tinubin 622LD, Tinubin 765, Tinubin 770, Tinubin 880, Tinubin 5866, Tinubin B97, CHIMASSORB 119FL, and CHIMASSORB 944LD (all of which are manufactured by BASF); AdekaStabs LA-57, LA-62, LA-63, LA-67 and LA-68 (all from ADEKA Corporation); Sanols LS-292, LS-2626, LS-765, LS-744, LS-1114 (all of which are manufactured by Sankyo Life Tech Co., Ltd.), SABOSTAB UV91, SABOSTAB UV119, SONGSORB CS5100, SONGSORB CS622, SONGSORB CS944 (all of which are manufactured by SONGWON), Nocrack CD (manufactured by Ouchi Shinko Chemical Industrial Co., Ltd.) or the like.

### (Ultraviolet Absorbers)

The curable composition may contain an ultraviolet absorber. When an ultraviolet absorber is used, weather resistance of a surface of the cured product can be enhanced. As the ultraviolet absorber, benzophenone-based compounds, benzotriazole-based compounds, salicylate-based compounds, triazine-based compounds, substituted tolyl-based compounds, metal chelate-based compounds, etc. may be exemplified. Among these, the benzotriazole-based compounds are particularly preferable. Examples of the benzotriazole compounds include Tinubin 234, Tinubin 326, Tinubin 327, Tinubin 328, Tinubin 329, Tinubin 350, Tinubin 571, Tinubin 900, Tinubin 928, Tinubin 1130, and Tinubin 1600 (all of which are manufactured by BASF); and SONGSORB 3290 (manufactured by SONGWON). Examples of the triazine-based compounds include Tinubin 400, Tinubin 405, Tinubin 477, and Tinubin 1577 ED (all of which are manufactured by BASF); and SONGSORB CS400 and SONGSORB 1577 (manufactured by SONGWON). Examples of the benzophenone-based compounds include SONGSORB 8100 (manufactured by SONGWON). A used amount of the ultraviolet absorber is preferably 0.1 to 10 parts by weight, and more preferably 0.2 to 5 parts by weight, with respect to 100 parts by weight of the polymer (A). It is preferable to use a phenol-based antioxidant or a hindered phenol-based antioxidant, a hindered amine-based light stabilizer, and a benzotriazole-based ultraviolet absorber in combination. As a product in which an antioxidant, a light stabilizer, and an ultraviolet absorber are mixed, Addworks IBC760 (manufactured by Clariant) can be used.

### (Physical Property Adjusting Agent)

The curable composition may optionally contain a physical property adjusting agent for adjusting tensile properties of the cured product. The physical property adjusting agent is not particularly limited. Examples of the physical property adjusting agent include alkylalkoxysilanes such as methyltrimethoxysilane, dimethyldimethoxysilane, trimethylmethoxysilane, n-propyltrimethoxysilane, etc.; alkylisopropenoxysilanes such as dimethyldiisopropenoxysilane, methyltriisopropenoxysilane, γ-glycidoxypropylmethyldiisopropenoxysilane, etc.; alkoxysilanes having a functional group such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-β-aminoethyl-γ-aminopropylmethyldimethoxysilane, γ-mercaptopropyltrimethoxysilane, γ-mercaptopropylmethyldimethoxysilane, etc.; silicone varnishes; polysiloxanes; or the like. By using the physical property adjusting agent, hardness of the cured product can be increased, or conversely, the hardness of the cured product can be decreased to produce elongation at break. The physical property adjusting agents may be used alone or in combination of two or more types thereof.

In particular, a compound that generates a compound having a monovalent silanol group in the molecule by hydrolysis has an effect of reducing modulus of the cured product without deteriorating stickiness of a surface of the cured product. As the compound that generates a compound having a monovalent silanol group in the molecule by hydrolysis, a compound which generates trimethylsilanol is particularly preferable. Examples of the compound that generates a compound having a monovalent silanol group in the molecule by hydrolysis include compounds described in Japanese Unexamined Patent Application, Publication No. H5-117521. In addition, the following may also be exemplified: derivatives of alkyl alcohols such as hexanol, octanol, decanol, etc., the derivatives generating a trialkylsilanol such as trimethylsilanol by hydrolysis; and derivatives of polyhydric alcohols having 3 or more hydroxy groups such as trimethylolpropane, glycerin, pentaerythritol, or sorbitol, the derivatives generating a trialkylsilanol such as trimethylsilanol by hydrolysis, as described in Japanese Unexamined Patent Application, Publication No. H11-241029. Further, the following may also be exemplified: derivatives of oxyalkylene polymers that generate a silicon compound that generates a trialkylsilanol such as trimethylsilanol, etc. by hydrolysis, as described in Japanese Unexamined Patent Application, Publication No. H7-258534. Further, the following may also be used: a polymer having a crosslinkable hydrolyzable silicon-containing group and a silicon-containing group capable of forming a monosilanol-containing compound by hydrolysis, as described in Japanese Unexamined Patent Application, Publication No. H6-279693. The physical property adjusting agent is used in an amount of 0.1 to 20 parts by weight, preferably 0.5 to 10 parts by weight, with respect to 100 parts by weight of the polymer (A).

### (Tackiness-Imparting Resin)

The curable composition may contain a tackiness-imparting resin for the purpose of enhancing adhesion and adhesiveness of the cured product to the base material. The tackiness-imparting resin is not particularly limited, and tackiness-imparting resins commonly used in various curable compositions can be used. Examples of the tackiness-imparting resin include terpene-based resins, aromatic modified terpene resins, hydrogenated terpene resins, terpene-phenol resins, phenol resins, modified phenol resins, xylene-phenol resins, cyclopentadiene-phenol resins, coumarone indene resins, rosin-based resins, rosin ester resins, hydrogenated rosin ester resins, xylene resins, low molecular weight polystyrene-based resins, styrene copolymer resins, styrene-based block copolymers, hydrogenated styrene-based block copolymers, petroleum resins, hydrogenated petroleum resins, and DCPD resins. Examples of the petroleum resins include a C5 hydrocarbon resin, a C9 hydrocarbon resin, and a C5C9 hydrocarbon copolymer resin. These may be used alone or in combination of two or more types thereof. A used amount of the tackiness-imparting resin is preferably 2 to 100 parts by weight, more preferably 5 to 50 parts by weight, and still more preferably 5 to 30 parts by weight with respect to 100 parts by weight of the polymer (A). When the tackiness-imparting resin is used in an amount in the range described above, a cured product having good adhesion and adhesiveness to the base material can be formed. The curable composition has an appropriate viscosity, and handling property of the curable composition is good.

### (Compound containing Epoxy Group)

The curable composition may include a compound containing an epoxy group. When a compound having an epoxy group is used, resilience of the cured product can be enhanced. Examples of the compound having an epoxy group include epoxidized unsaturated oils and fats, epoxidized unsaturated fatty acid esters, alicyclic epoxy compounds, epichlorohydrin derivatives, and mixtures thereof. Examples of the compound having an epoxy group include epoxidized soybean oil, epoxidized linseed oil, bis(2-ethylhexyl)-4,5-epoxycyclohexane-1,2-dicarboxylate (E-PS), epoxyoctyl stearate, epoxybutyl stearate, etc. A used amount of the compound containing an epoxy group is preferably 0.5 to 50 parts by weight with respect to 100 parts by weight of the polymer (A).

### (Epoxy Resin)

The curable composition may contain an epoxy resin. A curable composition containing an epoxy resin is preferred as an adhesive, particularly an adhesive for outer wall tiles. Examples of the epoxy resin include bisphenol A type epoxy resins and novolac type epoxy resins. A ratio of a weight of the polymer (A) to a weight of the epoxy resin is preferably in the range of 100/1 to 1/100 in terms of weight ratio (weight of the polymer (A))/(weight of the epoxy resin). When the polymer (A) and the epoxy resin are used in the above ratio, a high-strength cured product excellent in impact strength and toughness is easily formed. When an epoxy resin is used, the curable composition may contain a curing agent together with the epoxy resin. The type of the curing agent is not particularly limited, and a generally used curing agent can be used. A used amount of the curing agent is preferably 0.1 to 300 parts by weight with respect to 100 parts by weight of the epoxy resin.

### (Photocurable Substance)

The curable composition may include a photocurable substance. When the photocurable substance is used, a film of the photocurable substance is formed on the surface of the cured product, and stickiness and weather resistance of the cured product can be improved. As the photocurable substance, various compounds such as an organic monomer, an oligomer, a resin, etc. are known. Numerous compositions containing a photocurable substance are also known. Typical photocurable substances include unsaturated acrylic compounds, polyvinyl cinnamates, and azidated resins. Examples of the unsaturated acrylic compounds include monomers and oligomers having one or more acrylic unsaturated groups or methacrylic unsaturated groups, and mixtures thereof. A used amount of the photocurable substance is preferably 0.1 to 20 parts by weight, and more preferably 0.5 to 10 parts by weight, with respect to 100 parts by weight of the polymer (A). When the photocurable substance is used in an amount within such a range, a flexible cured product having excellent weatherability and suppressed occurrence of cracking is easily formed.

### (Oxygen-Curable Substance)

The curable composition may contain an oxygen-curable substance. Examples of the oxygen-curable substance include unsaturated compounds capable of reacting with oxygen in the air. When the curable substance contains an oxygen-curable substance, the oxygen-curable substance reacts with oxygen in the air to form a cured film in the vicinity of the surface of the cured product. When a cured film is formed on the surface of the cured product, stickiness and adhesion of dirt and dust to the surface of the cured product can be prevented. Examples of the oxygen-curable substance include dry oils such as tung oil, linseed oil, etc.; various alkyd resins obtained by modifying dry oils; an acrylic polymer, an epoxy-based resin, and a silicon resin, which are modified with a dry oil; liquid polymers such as polymers of 1,2-polybutadiene, 1,4-polybutadiene, or C5 to C8 diene obtained by polymerization or copolymerization of diene-based compounds such as butadiene, chloroprene, isoprene, or 1,3-pentadiene; or the like. These may be used alone or in combination of two or more types thereof. A used amount of the oxygen-curable substance is preferably 0.1 to 20 parts by weight, more preferably 0.5 to 10 parts by weight, with respect to 100 parts by weight of the polymer (A). When the oxygen-curable substance is used in an amount within such a range, the surface is less likely to be contaminated with dirt and/or dust, and a cured product excellent in mechanical properties such as tensile properties, etc. is easily formed. As described in Japanese Unexamined Patent Application, Publication No. H3-160053, the oxygen-curable substance is preferably used in combination with a photocurable substance.

### <Preparation of Curable Compositions>

The curable composition can be prepared as a one-component type in which all the compounding ingredients are blended in advance, sealed and stored, and cured by moisture in the air after application. The one-component curable composition can be prepared by mixing the organic polymer (A), the condensation catalyst (B), the silane condensate (C), and the aforementioned optional component as necessary. The curing agent composition can also be prepared as a two-component type in which a compounding material as the curing agent containing the curing catalyst (B), the silane condensate (C), a filler, a plasticizer, water, etc. are mixed, and a separately prepared composition containing the organic polymer (A) are mixed before use. From the viewpoint of workability, the one-component type is preferable. In the preparation of the curable composition, the silane condensate (C) is not produced by mixing the above-mentioned silane compound monomer with other components, and then carrying out condensation, but is preferably produced by condensing the above-mentioned silane compound monomer in advance to form the silane condensate (C) and then mixing the silane condensate (C) with other components. In a case where the curable composition is a one-component type, since all the compounding components are compounded in advance, it is preferable to dehydrate and dry compounding components containing moisture in advance and use them after the dehydration and drying, or dehydrate them by vacuum, or the like during compounding and kneading. By adding an alkoxysilane compound such as methyltrimethoxysilane, phenyltrimethoxysilane, n-propyltrimethoxysilane, vinyltrimethoxysilane, vinylmethyldimethoxysilane, γ-mercaptopropylmethyldimethoxysilane, γ-mercaptopropylmethyldiethoxysilane, γ-glycidoxypropyltrimethoxysilane, etc. in addition to performing the above-described dehydration drying method, storage stability is further improved. A used amount of the dehydrating agent, particularly a silicon compound such as vinyltrimethoxysilane that can react with water is preferably 0.1 to 20 parts by weight, and more preferably 0.5 to 10 parts by weight, with respect to 100 parts by weight of the polymer (A).

The curable composition can be used as a sealing material for construction, an industrial adhesive, a composition for forming a waterproof coating film, a raw material for tackifiers, or the like. In addition, the curable composition may be used as a sealing agent for buildings, ships, automobiles, roads, or the like. In addition, the curable composition may adhere to a wide range of base materials, such as glass, porcelain, wood, metal resin molded articles, etc. alone or with a help of primers. Thus, the curable composition can also be used as a sealing composition and an adhesive composition of various types. The curable composition can also be used as a contact adhesive other than application as conventional adhesives. In addition, the curable compositions are also useful as a food packaging material, a casting rubber material, a moulage material, and a paint. The cured product of the curable composition exhibits low water absorbency. Therefore, the curable composition and the cured product thereof are particularly suitable for use as a waterproof material such as a sealing material, a waterproof adhesive, a waterproof coating film, etc.

### <Method for producing Cured Products>

Prior to curing, the curable composition is shaped into a desired shape by methods such as coating, casting, or filling.

The curable composition is shaped by application, casting or filling, and then is cured under a desired environment such as normal temperature and normal humidity.

The present invention is not limited to the above-described embodiments, and various modifications can be made within the scope of the claims, and embodiments obtained by appropriately combining technical means disclosed in different embodiments are also included in the technical scope of the present invention.

That is, one embodiment of the present invention includes the following.
<1> A curable composition including an organic polymer (A), a curing catalyst (B), and a silane condensate (C),
   the organic polymer (A) having a reactive silicon group represented by the following formula (1):

      -SiR¹X₂ (1)
   in which R¹ represents a hydrocarbon group having 1 to 20 carbon atoms, X represents a hydroxy group or a hydrolyzable group, and two X groups may be the same or different,
   the curing catalyst (B) including an amidine compound (b1) and a titanium compound (b2),
   the amidine compound (b1) being represented by the following formula (2):

      R²N=CR³-NR⁴₂ (2)

      in which R², R³, and R⁴ are a hydrogen atom or a hydrocarbon group having 1 to 20 carbon atoms which may have a substituent, two R⁴ groups may be the same or different, and
      any two of R², R³, and two R⁴ groups may be bonded to each other to form a ring,
      the titanium compound (b2) being represented by the following formula (3) or a condensate thereof:

         Ti(OR⁵)_{d}Y_{4-d} (3)

         in which R⁵ is a hydrocarbon group having 1 to 20 carbon atoms which may have a substituent, Y is a chelate coordination compound, and d is an integer of 0 to 4,
         the silane condensate (C) being represented by the following formula (4): 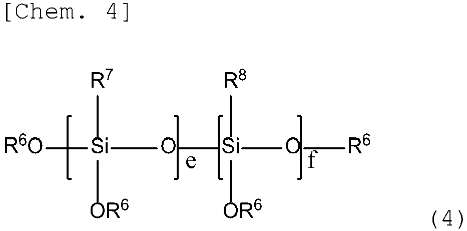 in which R⁶ is a methyl group or an ethyl group, R⁶ may be the same or different, R⁷ and R⁸ are hydrocarbon groups having 1 to 20 carbon atoms which may have a substituent, R⁷ and R⁸ may be the same or different, and e and f are integers of 1 to 50.
<2> The curable composition as described in <1>, in which R⁶ of the silane compound (C) is a methyl group.
<3> The curable composition as described in <1> or <2>, in which the silane condensate (C) is a condensate of at least one type of trimethoxysilane selected from vinyltrimethoxysilane, amino group-containing trimethoxysilane, or alkyltrimethoxysilane.
<4> The curable composition as described in any one of <1> to <3>, in which d in the formula (3) represents 0 or an integer of 1 to 3.
<5> The curable composition as described in any one of <1> to <4>, in which a main chain structure of the organic polymer (A) is a polyoxyalkylene.
<6> The curable composition as described in any one of <1> to <5>, in which the amidine compound (b1) is DBU (1,8-diazabicyclo[5.4.0]-7-undecene).
<7> The curable composition as described in any one of <1> to <6>, in which (b2)/(b1), a weight ratio of the titanium compound (b2) to the amidine compound (b1), is 1.0 to 10.

### EXAMPLES

Hereinafter, the present invention will be described in more detail with reference to Examples, but the present invention is not limited to these Examples.

### <Preparation Example of Organic Polymer (A)>

Hereinafter, the number average molecular weight is a GPC molecular weight measured under the following conditions.
Liquid Delivery System: Tosoh HLC-8120 GPC
Column: Tosoh TSK-GEL H type
Solvent: THF
Molecular weight: expressed in terms of polystyrene
Measurement temperature: 40°C

The terminal group equivalent molecular weight in the Examples is a molecular weight obtained by determining a hydroxy value according to the measurement method of JIS K 1557, and an iodine value according to JIS K 0070, and further by taking into consideration the structure of the organic polymer. A degree of branching depending on the polymerization initiator used is considered for the structure of the organic polymer.

An average number of reactive silicon groups per terminal of each organic polymer shown in the Examples was calculated by ¹H-NMR (measurement in CDCl₃ solvent using AVANCE III HD-500 manufactured by Bruker Corporation).

### (Preparation Example 1: Organic Polymer (A-1))

Propylene oxide was polymerized with a zinc hexacyanocobaltate glyme complex catalyst using a 1/1 (weight ratio) mixture of polyoxypropylene diol having a molecular weight of about 2,000 and polyoxypropylene triol having a molecular weight of 3,000 as an initiator to obtain a hydroxy group-terminated polypropylene oxide having a number average molecular weight of 19,000.

A methanol solution of 1.2 molar equivalents of NaOMe with respect to the hydroxy group of the obtained hydroxy group-terminated polyoxypropylene was added. After methanol was distilled off from the reaction solution, allyl chloride was further added to the reaction solution to convert the terminal hydroxy groups into allyl groups. Unreacted allyl chloride was removed by vacuum devolatilization. Thereby, polypropylene oxide with a number average molecular weight of about 19,000 having allyl groups at the terminals was obtained. To 100 parts by weight of the obtained unpurified allyl group-terminated polyoxypropylene, 300 parts by weight of n-hexane and 300 parts by weight of water were mixed and stirred. Next, the mixture was separated into an aqueous phase and a hexane phase by centrifugation, and then the aqueous phase was removed. To the obtained hexane phase, 300 parts by weight of water was mixed again, and the mixture was stirred. Next, the mixture was separated into an aqueous phase and a hexane phase by centrifugation, and then the aqueous phase was removed. Thereafter, hexane was removed from the recovered hexane phase by vacuum devolatilization. Thereby, purified allyl group-terminated polypropylene oxide (hereinafter referred to as an allyl polymer) was obtained.

To 100 parts by weight of the obtained allyl polymer, 150 ppm of an isopropanol solution of a platinum vinyldisiloxane complex having a platinum content of 3 wt% was added as a catalyst. Then, 0.7 molar equivalents of dimethoxymethylsilane with respect to the allyl groups of the allyl polymer were added, and the allyl group terminals and dimethoxymethylsilane were reacted at 90°C for 5 hours to obtain dimethoxymethylsilyl group-terminated polypropylene oxide (A-1). The number of dimethoxymethylsilyl groups was about 0.7 per polymer chain terminal.

### (Preparation Example 2: Organic Polymer (A-2))

Propylene oxide was polymerized with a zinc hexacyanocobaltate glyme complex catalyst using polyoxypropylene diol having a molecular weight of about 2,000 as an initiator to obtain a hydroxy group-terminated polypropylene oxide having a number average molecular weight of 28,500.

A methanol solution of 1.0 molar equivalent of NaOMe with respect to the hydroxy group of the obtained hydroxy group-terminated polyoxypropylene was added. After methanol was distilled off from the reaction solution at 140°C, 1.0 molar equivalent of allyl glycidyl ether was further added to the reaction solution and reacted for 2 hours. Further, allyl chloride was added to convert the terminal hydroxy groups into allyl groups. Thereby, an allyl polymer having a number average molecular weight of about 28,500 having a plurality of allyl groups at the terminals was obtained. The allyl polymer was purified in the same manner as in Preparation Example 1. To 100 parts by weight of the obtained allyl polymer, 150 ppm of an isopropanol solution of a platinum vinyldisiloxane complex having a platinum content of 3 wt% was added as a catalyst. Then, 0.8 mol equivalents of dimethoxymethylsilane with respect to the allyl group of the allyl polymer were added, and the allyl group terminals and dimethoxymethylsilane were reacted at 90°C for 5 hours to obtain dimethoxymethylsilyl group-terminated polypropylene oxide (A-2). The number of dimethoxymethylsilyl groups was about 1.5 per polymer chain terminal.

### (Preparation Example 3: Organic Polymer (A-3))

Propylene oxide was polymerized with a zinc hexacyanocobaltate glyme complex catalyst using polyoxypropylene triol having a molecular weight of about 3,000 as an initiator to obtain a hydroxy group-terminated polypropylene oxide having a branched structure in the main chain and having a number average molecular weight of about 25,000.

The allyl polymer was purified in the same manner as in Preparation Example 1. To 100 parts by weight of the obtained allyl polymer, 150 ppm of an isopropanol solution of a platinum vinyldisiloxane complex having a platinum content of 3 wt% was added as a catalyst. Then, 0.7 molar equivalents of dimethoxymethylsilane with respect to the allyl group of the allyl polymer were added, and the allyl group terminals and dimethoxymethylsilane were reacted at 90°C for 5 hours to obtain dimethoxymethylsilyl group-terminated polypropylene oxide (A-3). The number of dimethoxymethylsilyl groups was about 0.7 per polymer chain terminal.

### (Preparation Example 4: Organic Polymer (A-4))

Propylene oxide was polymerized with a zinc hexacyanocobaltate glyme complex catalyst using polyoxypropylene triol having a molecular weight of about 4,500 as an initiator to obtain a hydroxy group-terminated polypropylene oxide having a number average molecular weight of about 14,300.

A methanol solution of 1.2 molar equivalents of NaOMe with respect to the hydroxy group of the obtained hydroxy group-terminated polypropylene oxide was added. After methanol was distilled off from the reaction solution, allyl chloride was further added to the reaction solution to convert the terminal hydroxy groups to allyl groups. Thereby, an allyl polymer having allyl groups at the terminals and having a number average molecular weight of about 14,300 was obtained. The allyl polymer was purified in the same manner as in Preparation Example 1. To 100 parts by weight of the obtained allyl polymer, 150 ppm of an isopropanol solution of a platinum vinyldisiloxane complex having a platinum content of 3 wt% was added as a catalyst. Then, 0.8 molar equivalents of dimethoxymethylsilane with respect to the allyl group of the allyl polymer were added, and the allyl group terminals and dimethoxymethylsilane were reacted at 90°C for 5 hours to obtain dimethoxymethylsilyl group-terminated polypropylene oxide (A-4). The number of dimethoxymethylsilyl groups was about 0.8 per polymer chain terminal.

### (Preparation Example 5: Organic Polymer (A-5))

In a four-necked flask equipped with a stirrer, 22 parts by weight of isobutyl alcohol was placed, and the temperature was raised to 90°C under a nitrogen atmosphere. To the flask, a mixed solution containing 14.8 parts by weight of methyl methacrylate, 60.6 parts by weight of butyl acrylate, 20.1 parts by weight of stearyl methacrylate, 4.5 parts by weight of 3-(dimethoxymethylsilyl)propyl methacrylate, and 1.9 parts by weight of 2,2'-azobis(2-methylbutyronitrile) dissolved in 17.1 parts by weight of isobutyl alcohol was added dropwise over 5 hours. Further, a mixed solution containing 0.2 parts by weight of 2,2'-azobis(2-methylbutyronitrile) dissolved in 1.8 parts by weight of isobutyl alcohol was added, and polymerization reaction was performed at 90°C for 2 hours. Thereby, an isobutyl alcohol solution (solid content: 70% by weight) of a poly(meth)acrylate (a-1) having 1.8 dimethoxymethylsilyl groups on average in one molecule and a number average molecular weight of 9,800 was obtained.

70 parts by weight of the organic polymer (A-4) obtained in Preparation Example 4 and 42.8 parts by weight of an isobutyl alcohol solution of the organic polymer (a-1) were mixed, and isobutyl alcohol was removed by vacuum devolatilization. Thereby, a polymer mixture (A-5) in which a weight ratio of the organic polymer (A-4) / the organic polymer (a-1) was 70/30 was obtained.

### (Preparation Example 6: Organic Polymer (A-6))

Propylene oxide was polymerized with a zinc hexacyanocobaltate glyme complex catalyst using polyoxypropylene diol having a molecular weight of about 2,000 as an initiator to obtain a hydroxy group-terminated polypropylene oxide having a number average molecular weight of about 16,000.

A methanol solution of 1.2 molar equivalents of NaOMe with respect to the hydroxy group of the obtained hydroxy group-terminated polypropylene oxide was added. After methanol was distilled off from the reaction solution, allyl chloride was further added to the reaction solution to convert the terminal hydroxy groups into allyl groups. Thereby, an allyl polymer having a number average molecular weight of about 14,300 and having allyl groups at the terminals. The allyl polymer was purified in the same manner as in Preparation Example 1. To 100 parts by weight of the obtained allyl polymer, 150 ppm of an isopropanol solution of a platinum vinyldisiloxane complex having a platinum content of 3 wt% was added as a catalyst. Then, 0.6 molar equivalents of dimethoxymethylsilane with respect to the allyl group of the allyl polymer were added, and the allyl group terminals and dimethoxymethylsilane were reacted at 90°C for 5 hours to obtain dimethoxymethylsilyl group-terminated polypropylene oxide (A-6). The number of dimethoxymethylsilyl groups was about 0.6 per polymer chain terminal.

### <Synthesis Example of Curing Catalyst (B)>

### (Synthesis Example 1: complex 1)

In a 200 mL recovery flask, 30 g of TC-750 (titanium bis(ethylacetoacetate) diisopropoxide) (manufactured by Matsumoto Fine Chemical Co., Ltd.) was added. While stirring the contents of the flask, 10 g of DBU (1,8-diazabicyclo[5.4.0]-7-undecene, manufactured by Tokyo Chemical Industry, Co., Ltd.) was slowly added dropwise into the flask. After completion of the dropwise addition, a lid was put on the flask, and the contents of the flask were stirred at room temperature for 24 hours to obtain 40.0 g of reddish-brown liquid complex 1.

### (Synthesis Example 2: complex 2)

30.0 g of reddish-brown liquid complex 2 was obtained in the same manner as in Synthesis Example 1 except that 20 g of TC-750 (titanium bis(ethylacetoacetate) diisopropoxide, manufactured by Matsumoto Fine Chemical Co., Ltd.) was used.

### (Synthesis Example 3: complex 3)

30.0 g of a pale-yellow liquid composite 3 was obtained in the same manner as in Synthesis Example 1 except that 20 g of TA-23 (butyl titanate dimer, manufactured by Matsumoto Fine Chemical Co., Ltd.) was used.

### (Method for producing Curable Composition)

### (Examples 1 to 4 and Comparative Example 1)

According to compositions (weight ratios) shown in Table 1, ground calcium carbonate, colloidal calcium carbonate, a plasticizer, a pigment, a thixotropy-imparting agent, an antioxidant, an ultraviolet absorber, and a light stabilizer were added to the organic polymer (A) and mixed using a spatula. Each of the resulting mixtures was dispersed three times through a three-roll mill (manufactured by Kodaira Seisakusho Co., Ltd.), and then dehydrated under reduced pressure using a planetary mixer to obtain a main agent. The silane compound and the curing catalyst (B) shown in Table 1 were added to the main agent in this order and mixed to obtain a curable composition.

The components in Table 1 are as follows.
Organic Polymer (A) (((A-1) (organic polymer (A-1) obtained in Preparation Example 1))
Colloidal calcium carbonate (trade name: Hakuenka CCR, manufactured by Shiroishi Kogyo Kaisha, Ltd.)
Ground calcium carbonate (trade name: Whiton SB, manufactured by Bihoku Funka Kougyo Co., Ltd.)
Plasticizer (trade name: Hexamoll DINCH, manufactured by BASF) Pigment (trade name: Tipaque R820, manufactured by Ishihara Sangyo Kaisha, Ltd.)
Thixotropy-imparting agent (trade name: Crayvallac SLT, manufactured by ARKEMA)
Antioxidant (trade name: Irganox 1010, manufactured by BASF) Ultraviolet absorber (trade name: Tinuvin 326, manufactured by BASF)
Light stabilizer (trade name: Tinuvin 770, manufactured by BASF)
Amidine compound (b1) (DBU (1,8-diazabicyclo[5.4.0]undec-7-ene), manufactured by Tokyo Chemical Industry Co., Ltd.)
Titanium compound (b2) (trade name: TC-750, manufactured by Matsumoto Fine Chemical Co., Ltd.)
Silane condensate (C) (trade name: Dynasylan 6490, manufactured by Evonik) (trade name: Dynasylan 1146, manufactured by Evonik)
Silane compounds other than the silane condensate (C) (trade name: Dynasylan DAMO (γ-(2-aminoethyl)aminopropyltrimethoxysilane) manufactured by Evonik), (trade name: Dynasylan AMMO (γ-aminopropyltrimethoxysilane), manufactured by Evonik), (trade name: Dynasylan VTMO (vinyltrimethoxysilane), manufactured by Evonik) .

### (Skin Formation Time (Curability Evaluation))

Each of the curable compositions thus obtained was filled in a moisture-proof container and stored for 7 days in an atmosphere of 23°C and 50% relative humidity. Under an atmosphere of 23°C and a relative humidity of 50%, the curable composition was filled into a mold having a thickness of about 5 mm, and the surface of the curable composition was planarized. The time at which the surface was planarized was taken as the curing start time. The curing time (curability) was measured by touching the curable composition in the mold with a spatula, and setting the time at which the mixture was not adhered to the spatula as the skin formation time. The measurement results are shown in Table 1.

**[Table 1]**

| | | Example | | | | Comparative Example |
|---|---|---|---|---|---|---|
| | | 1 | 2 | 3 | 4 | 1 |
| Organic polymer (A) | (A-1) | 100 | 100 | 100 | 100 | 100 |
| Colloidal calcium carbonate | Hakuenka CCR | 160 | 160 | 160 | 160 | 160 |
| Ground calcium carbonate | Whiton SB | 54 | 54 | 54 | 54 | 54 |
| Plasticizer | Hexamoll DINCH | 90 | 90 | 90 | 90 | 90 |
| Pigment | Tipaque R820 | 5 | 5 | 5 | 5 | 5 |
| Thixotropy-imparting agent | Crayvallac SLT | 5 | 5 | 5 | 5 | 5 |
| Antioxidant | Irganox 1010 | 1 | 1 | 1 | 1 | 1 |
| Ultraviolet absorber | Tinuvin 326 | 1 | 1 | 1 | 1 | 1 |
| Light stabilizer | Tinuvin 770 | 1 | 1 | 1 | 1 | 1 |
| Curing catalyst (B) | | | | | | |
| Amidine compound (b1) | DBU | 1 | 1 | 1 | 1 | 1 |
| Titanium compound (b2) | TC-750 | 3 | 3 | 3 | 3 | 3 |

| Silane compound | | | | | | |
|---|---|---|---|---|---|---|
| Silane condensate (C) | Dynasylan 6490 | 4 | 4 | 4 | | |
| | Dynasylan 1146 | 3 | | | 3 | |
| Silane compounds other than silane condensate | Dynasylan DAMO | | 3 | | | |
| | Dynasylan AMMO | | | 3 | | 3 |
| | Dynasylan VTMO | | | | 4 | 4 |
| Curability | Skin formation time (min) | 14 | 43 | 90 | 146 | >600 |

From the measurement results of Table 1, according to the comparison between Examples 1 to 4 and Comparative Example 1, it can be seen that the curable composition containing the silane condensate (C) cures more rapidly than the curable composition not containing the silane condensate (C).

### (Examples 5 to 22)

According to the compositions (weight ratios) shown in Table 2, ground calcium carbonate, colloidal calcium carbonate, a plasticizer, a pigment, a thixotropy-imparting agent, an antioxidant, an ultraviolet absorber, and a light stabilizer were added to the organic polymer (A) and mixed using a spatula. Each of the resulting mixtures was dispersed three times through a three-roll mill (manufactured by Kodaira Seisakusho Co., Ltd.), and then dehydrated under reduced pressure using a planetary mixer to obtain a main agent. The silane condensate (C) and the curing catalyst (B) shown in Table 2 were added to the main agent in this order and mixed to obtain a curable composition.

The components in Table 2 are as follows. As the organic polymer (A), the following was used: (A-1) (the organic polymer (A-1) obtained in Preparation Example 1), (A-2) (organic polymer (A-2) obtained in Preparation Example 2), (A-3) (organic polymer (A-3) obtained in Preparation Example 3), (A-5) (organic polymer (A-5) obtained in Preparation Example 5), and (A-6) (organic polymer (A-6) obtained in Preparation Example 6). As the colloidal calcium carbonate, Hakuenka CCR (manufactured by Shiroishi Kogyo Kaisha, Ltd.) was used. As the ground calcium carbonate, Whiton SB (manufactured by Bihoku Funka Kougyo Co., Ltd.) was used. As the plasticizer, Hexamoll DINCH (manufactured by BASF), DINP (diisononyl phthalate, manufactured by J-Plus Co., Ltd.), and Actcol P-23 (manufactured by Mitsui Chemicals & SKC Polyurethanes Inc.) were used. Tipaque R820 (manufactured by Ishihara Sangyo Kaisha, Ltd.) was used as the pigment. As the thixotropy-imparting agent, Crayvallac SLT (ARKEMA) was used. Irganox 1010 (manufactured by BASF) was used as the antioxidant. Tinuvin 326 (manufactured by BASF) was used as the ultraviolet absorber. Tinuvin 770 (manufactured by BASF) was used as the light stabilizer. As the amidine compound (b1), DBU (1,8-diazabicyclo[5.4.0]undec-7-ene) manufactured by Tokyo Chemical Industry Co., Ltd. was used. As the titanium compound (b2), TC-750 (titanium bis(ethylacetoacetate) diisopropoxide, manufactured by Matsumoto Fine Chemical Co., Ltd.), Tyzor KE-6 (titanium bis(ethylacetoacetate) diisobutoxide, manufactured by Dorf Ketal Co., Ltd.), Tyzor 9000 (titanium tetra-tert-butoxide, manufactured by Dorf Ketal Co., Ltd.), and Ti(OⁱPr)₄ (titanium tetraisopropoxide, manufactured by Tokyo Chemical Industry, Co., Ltd.) were used. Complex 1 is the complex 1 obtained in Synthesis Example 1. Complex 2 is the complex 2 obtained in Synthesis Example 2. Complex 3 is the complex 3 obtained in Synthesis Example 3. As the silane condensate (C), Dynasylan 6490 (manufactured by Evonik) and Dynasylan 1146 (manufactured by Evonik) were used.

### (Skin Formation Time (Curability Evaluation))

The curing time (curability) was measured in the same manner as in Examples 1 to 4 and Comparative Example 1. The measurement results are shown in Table 2.

**[Table 2]**

| | | Example | | | | | | | | | | | | | | | | | |
|---|---|---|---|---|---|---|---|---|---|---|---|---|---|---|---|---|---|---|---|
| | | 5 | 6 | 7 | 8 | 9 | 10 | 11 | 12 | 13 | 14 | 15 | 16 | 17 | 18 | 19 | 20 | 21 | 22 |
| Organic polymer (A) | (A-1) | 100 | 100 | 100 | | | | | 100 | 100 | 100 | 100 | 100 | 100 | 100 | | | | |
| | (A-2) | | | | 100 | | | | | | | | | | | 100 | | | |
| | (A-3) | | | | | 100 | | | | | | | | | | | 100 | | |
| | (A-5) | | | | | | 100 | | | | | | | | | | | 100 | |
| | (A-6) | | | | | | | 100 | | | | | | | | | | | 100 |
| Colloidal calcium carbonate | Hakuenka CCR | 160 | 160 | 160 | 160 | 160 | 160 | 160 | 160 | 160 | 160 | 160 | 160 | 160 | 160 | 160 | 160 | 160 | 160 |
| Ground calcium carbonate | Whiton SB | 54 | 54 | 54 | 54 | 54 | 54 | 54 | 54 | 54 | 54 | 54 | 54 | 54 | 54 | 54 | 54 | 54 | 54 |
| Plasticizer | Hexamoll DINCH | 90 | 90 | 90 | 90 | 90 | 90 | 90 | | | 90 | 90 | 90 | 90 | 90 | 90 | 90 | 90 | 90 |
| | DINP | | | | | | | | 90 | | | | | | | | | | |
| | Actcol P-23 | | | | | | | | | 90 | | | | | | | | | |
| Pigment | Tipaque R820 | 5 | 5 | 5 | 5 | 5 | 5 | 5 | 5 | 5 | 5 | 5 | 5 | 5 | 5 | 5 | 5 | 5 | 5 |
| Thixotropy-imparting agent | Crayvallac SLT | 5 | 5 | 5 | 5 | 5 | 5 | 5 | 5 | 5 | 5 | 5 | 5 | 5 | 5 | 5 | 5 | 5 | 5 |
| Antioxidant | Irganox 1010 | 1 | 1 | 1 | 1 | 1 | 1 | 1 | 1 | 1 | 1 | 1 | 1 | 1 | 1 | 1 | 1 | 1 | 1 |
| Ultraviolet absorber | Tinuvin 326 | 1 | 1 | 1 | 1 | 1 | 1 | 1 | 1 | 1 | 1 | 1 | 1 | 1 | 1 | 1 | 1 | 1 | 1 |
| Light stabilizer | Tinuvin 770 | 1 | 1 | 1 | 1 | 1 | 1 | 1 | 1 | 1 | 1 | 1 | 1 | 1 | 1 | 1 | 1 | 1 | 1 |
| Curing catalyst (B) | | | | | | | | | | | | | | | | | | | |
| Amidine compound (b1) | DBU | 1 | 1 | 1 | 1 | 1 | 1 | 1 | 1 | 1 | | | | | | | | | |
| Titanium compound (b2) | TC-750 | | | | 3 | 3 | 3 | 3 | 3 | 3 | | | | | | | | | |
| | Tyzor KE-6 | 3 | | | | | | | | | | | | | | | | | |
| | Tyzor 9000 | | 3 | | | | | | | | | | | | | | | | |
| | Ti(OⁱPr)₄ | | | 3 | | | | | | | | | | | | | | | |
| Complex 1 | | | | | | | | | | | 4 | 3 | | | 2 | 2 | 2 | 2 | 2 |
| Complex 2 | | | | | | | | | | | | | 3 | | | | | | |
| Complex 3 | | | | | | | | | | | | | | 3 | | | | | |
| Silane condensate (C) | Dynasylan 6490 | 4 | 4 | 4 | 4 | 4 | 4 | 4 | 4 | 4 | 4 | 4 | 4 | 4 | 4 | 4 | 4 | 4 | 4 |
| | Dynasylan 1146 | 3 | 3 | 3 | 3 | 3 | 3 | 3 | 3 | 3 | 3 | 3 | 3 | 3 | 3 | 3 | 3 | 3 | 3 |
| Curability | Skin formation time (min) | 19 | 91 | 111 | 4 | 8 | 15 | 34 | 11 | 28 | 25 | 49 | 46 | 189 | 165 | 38 | 91 | 100 | 300 |

From the measurement results of Table 2, it can be seen that all of the curable compositions of Examples 5 to 22 containing the silane condensate (C) showed good fast curability.

## Claims

1. A curable composition comprising an organic polymer (A), a curing catalyst (B), and a silane condensate (C),
the organic polymer (A) having a reactive silicon group represented by the following formula (1):
-SiR¹X₂ (1)
wherein R¹ represents a hydrocarbon group having 1 to 20 carbon atoms, X represents a hydroxy group or a hydrolyzable group, and two X groups may be the same or different,
the curing catalyst (B) comprising an amidine compound (b1) and a titanium compound (b2),
the amidine compound (b1) being represented by the following formula (2):
R²N=CR³-NR⁴₂ (2)
wherein R², R³, and R⁴ are a hydrogen atom or a hydrocarbon group having 1 to 20 carbon atoms which may have a substituent, two R⁴ groups may be the same or different, and any two of R², R³, and two R⁴ groups may be bonded to each other to form a ring,
the titanium compound (b2) being represented by the following formula (3) or a condensate thereof:
Ti(OR⁵)_{d}Y_{4-d} (3)
wherein R⁵ is a hydrocarbon group having 1 to 20 carbon atoms which may have a substituent, Y is a chelate coordination compound, and d is an integer of 0 to 4,
the silane condensate (C) being represented by the following formula (4): 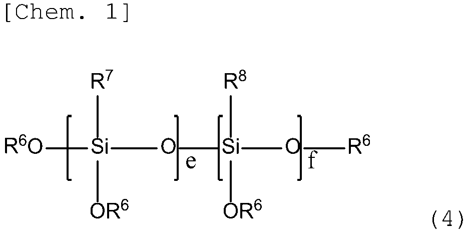
wherein R⁶ is a methyl group or an ethyl group, R⁶ may be the same or different, R⁷ and R⁸ are hydrocarbon groups having 1 to 20 carbon atoms which may have a substituent, R⁷ and R⁸ may be the same or different, and
e and f are integers of 1 to 50.

2. The curable composition according to claim 1, wherein R⁶ is a methyl group.

3. The curable composition according to claim 2, wherein the silane condensate (C) is a condensate of at least one type of trimethoxysilane selected from vinyltrimethoxysilane, amino group-containing trimethoxysilane, or alkyltrimethoxysilane.

4. The curable composition according to any one of claims 1 to 3, wherein d in the formula (3) represents 0 or an integer of 1 to 3.

5. The curable composition according to any one of claims 1 to 3, wherein a main chain structure of the organic polymer (A) is a polyoxyalkylene.

6. The curable composition according to any one of claims 1 to 3, wherein the amidine compound (b1) is DBU (1,8-diazabicyclo[5.4.0]-7-undecene).

7. The curable composition according to any one of claims 1 to 3, wherein (b2)/(b1), a weight ratio of the titanium compound (b2) to the amidine compound (b1), is 1.0 to 10.
